# EUROPÄISCHE PATENTSCHRIFT

(11) **EP 0 972 698 B1**
(45) Veröffentlichungstag und Bekanntmachung des Hinweises auf die Patenterteilung: **01.12.2004**
(21) Anmeldenummer: 99111006.5
(22) Anmeldetag: 10.06.1999
(51) Int. Cl.: B62D 33/067

(54) **Vordere Lagerung des kippbaren Fahrerhauses eines Lastkraftwagens**
Front bearing for tilt cab truck
Palier avant pour la cabine basculante d'un camion

(30) Priorität: 13.07.1998 DE 19831327
(43) Veröffentlichungstag der Anmeldung: 19.01.2000
(73) Patentinhaber: MAN Nutzfahrzeuge Aktiengesellschaft, 80976 München (DE)
(72) Erfinder: Kienast, Frank, Dipl.-Ing., 85726 Pfaffenhofen/Ilm (DE); Wunderlich, Walter, Dipl.-Ing., 4441 Behamberg (AT); Wührleitner, Gerhard, Dipl.-Ing., 4400 Steyr (AT)

(56) Entgegenhaltungen:
- EP-A- 0 798 198
- DE-A- 19 522 354

## Beschreibung

Die Erfindung betrifft eine vordere Lagerung des kippbaren Fahrerhauses eines Lastkraftwagens.

Zum Stand der Technik wird auf die DE 196 12 502 A1 und die DE 44 13 414 A1 verwiesen.

Bei der Fahrerhaus-Lagerung gemäß der DE 196 12 502 A1, die alle Merkmale der Oberbegriffs des Anspruchs 1 offenbart ist das kippbare Fahrerhaus vorne mittels zweier Feder-Dämpfer-Beine gegenüber dem Fahrgestell-Rahmen abgefedert, von denen jedes unten an einem rahmenfesten Lagerbock und oben an einem Endbereich einer Querstabilisatorstange angelenkt ist. Letztere bildet hier das vordere Lagerorgan für das Fahrerhaus und gleichzeitig auch die Schwenkachse für dessen Kippen, wobei das Fahrerhaus über das vordere Ende einer an ihm befestigten Konsole schwenkbar an der Querstabilisatorstange angelenkt ist. Die Lage des Fahrerhauses und der Feder-Dämpfer-Beine ist gegenüber dem Fahrgestell-Rahmen über die Querstabilisatorstange durch zwei Längslenker stabilisiert, von denen jeder mit seinem vorderen Ende die Querstabilisatorstange axial gesichert aufnimmt und mit seinem hinteren Ende über ein integriertes Lager quer- und längsgeführt sowie schwenkbar in einem rahmenfesten Lagerbock aufgenommen ist.

Bei der Fahrerhaus-Lagerung gemäß der DE 44 13 414 A1 ist das kippbare Fahrerhaus vorne ebenfalls mittels zweier Feder-Dämpfer-Beine gegenüber dem Fahrgestell-Rahmen abgefedert, von denen jedes unten an einem rahmenfesten Lagerbock und oben an einem einstückigen, U-förmigen Stabilisatorlenker angelenkt ist. Dieser Stabilisatorlenker besteht aus einem linken und rechten Federblattlenker, die vorne durch eine Querstrebe miteinander verbunden sind und von denen jeder hinten fest an einem Fahrgestell-Rahmen befestigt ist. Das Fahrerhaus selbst ist über zwei Konsolen am U-förmigen Stabilisatorlenker angelenkt, und zwar jeweils in einem Lagerbock, der oben am Stabilisatorlenker am Übergangsbereich zwischen einem Federblattlenker und der Querstrebe befestigt ist. Ersichtlicherweise ist diese Fahrerhaus-Lagerung in Fahrzeuglängsrichtung gesehen relativ unnachgiebig, was den Ansprüchen moderner Fahrerhaus-Lagerungen nicht mehr gerecht wird.

Es ist demgegenüber Aufgabe der Erfindung, eine vordere Lagerung für das kippbare Fahrerhaus eines Lastkraftwagens zu schaffen, die im Frontalcrashfall mit einem Hindernis oder einem anderen Fahrzeug einen energieverzehrenden Längsversatz des Fahrerhauses gegenüber dem Fahrgestell-Rahmen ermöglicht und im übrigen kostengünstig herstellbar und montierbar ist.

Diese Aufgabe ist erfindungsgemäß durch die im Anspruch 1 beanspruchte vordere Fahrerhaus-Lagerung gelöst.

Vorteilhafte Ausgestaltungen und Weiterbildungen dieser Lösung sind in den Unteransprüchen gekennzeichnet.

Die Vorteile der erfindungsgemäßen Lösung sind weiter hinten in Verbindung mit der nachfolgenden Beschreibung zweier Ausführungsbeispiele der Erfindung anhand der Zeichnung erläutert. In der Zeichnung zeigen:

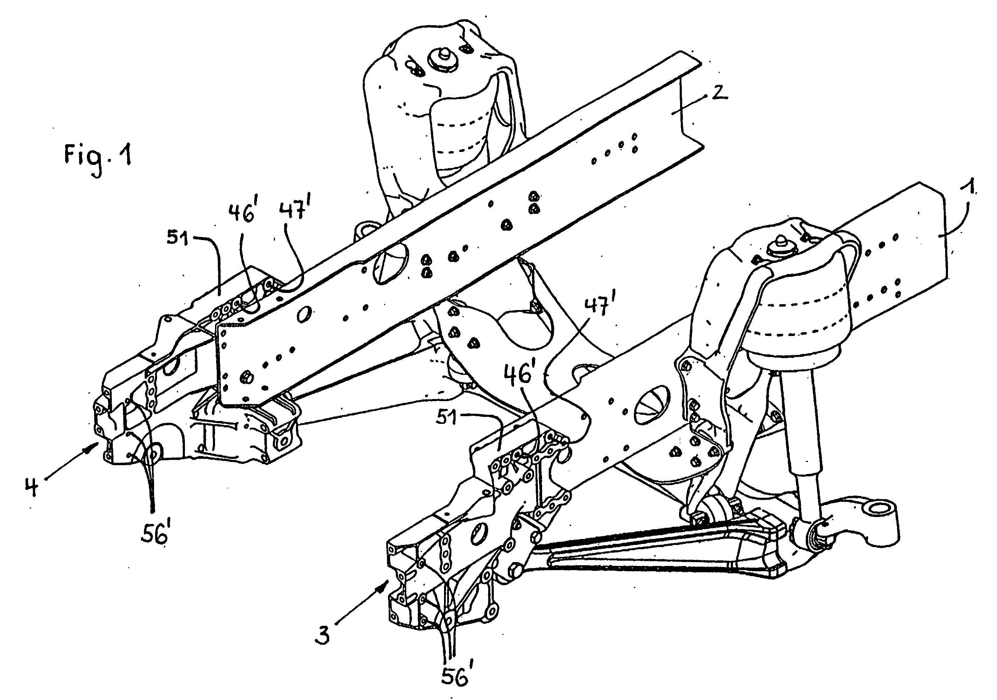

- Fig. 1: das vordere Ende eines Lastkraftwagen-Fahrgestells,
- Fig. 2: eine erste Ausführungsform der vorderen Lagerung für ein kippbares Fahrerhaus großer/hoher Bauart in Vorderansicht,
- Fig. 3: die Ausführungsform gemäß Fig. 2 in Seitenansicht von links,
- Fig. 4: die Ausführungsform gemäß Fig. 2 in Seitenansicht mit gekipptem Fahrerhaus,
- Fig. 5: die Ausführungsform der vorderen Lagerung gemäß Fig. 2 in vorderansichtiger Alleindarstellung ihrer linksseitigen Teile,
- Fig. 6: die Ausführungsform der vorderen Lagerung gemäß Fig. 2 in perspektivisch von schräg vorn gesehener Alleindarstellung ihrer linksseitigen Teile,
- Fig. 7: die Ausführungsform der vorderen Lagerung gemäß Fig. 2 in draufsichtiger Alleindarstellung ihrer linksseitigen Teile,
- Fig. 8: eine zweite Ausführungsform der vorderen Lagerung für ein kippbares Fahrerhaus normalhoher Bauart in Vorderansicht,
- Fig. 9: die Ausführungsform gemäß Fig. 8 in Seitenansicht von links,
- Fig. 10: die Ausführungsform der vorderen Lagerung gemäß Fig. 8 in perspektivisch von schräg vorn gesehener Alleindarstellung ihrer linksseitigen Teile,

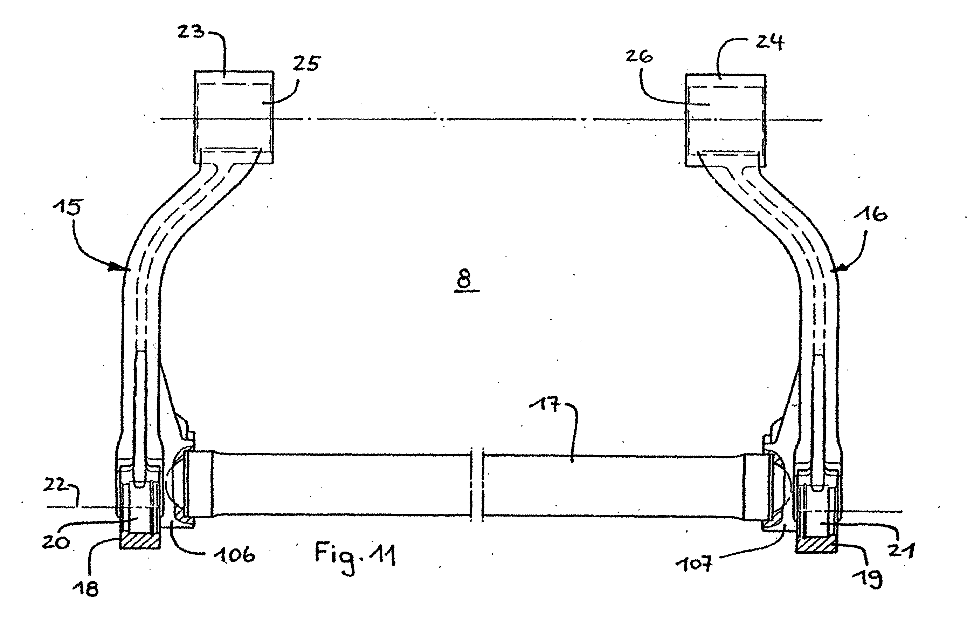

- Fig. 11: eine Ausführungsform einer U-förmigen Stabilisatorschwinge als Teil der vorderen Fahrerhaus-Lagerung in Draufsicht,
- Fig. 12: die Stabilisatorschwinge aus Fig. 11 in Seitenansicht von links,

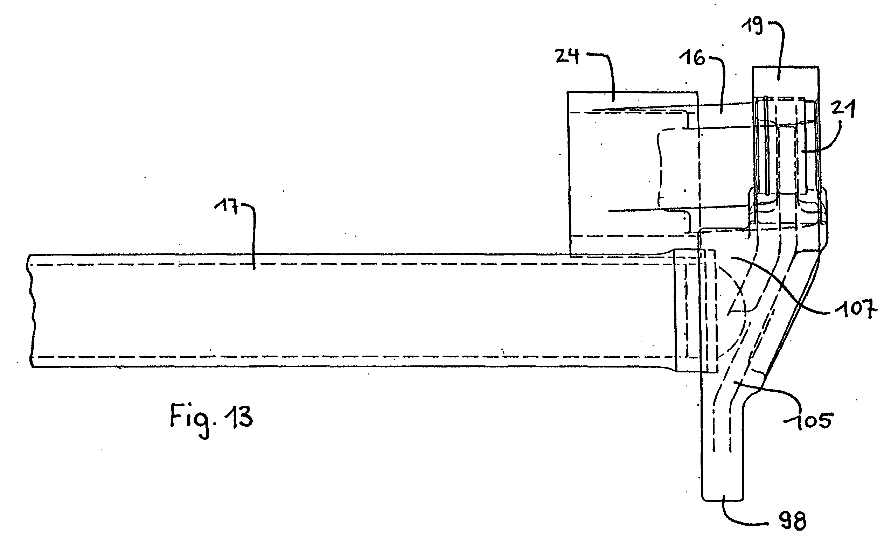

- Fig. 13: den linken Abschnitt der Stabilisatorschwinge aus Fig. 11 in Vorderansicht,

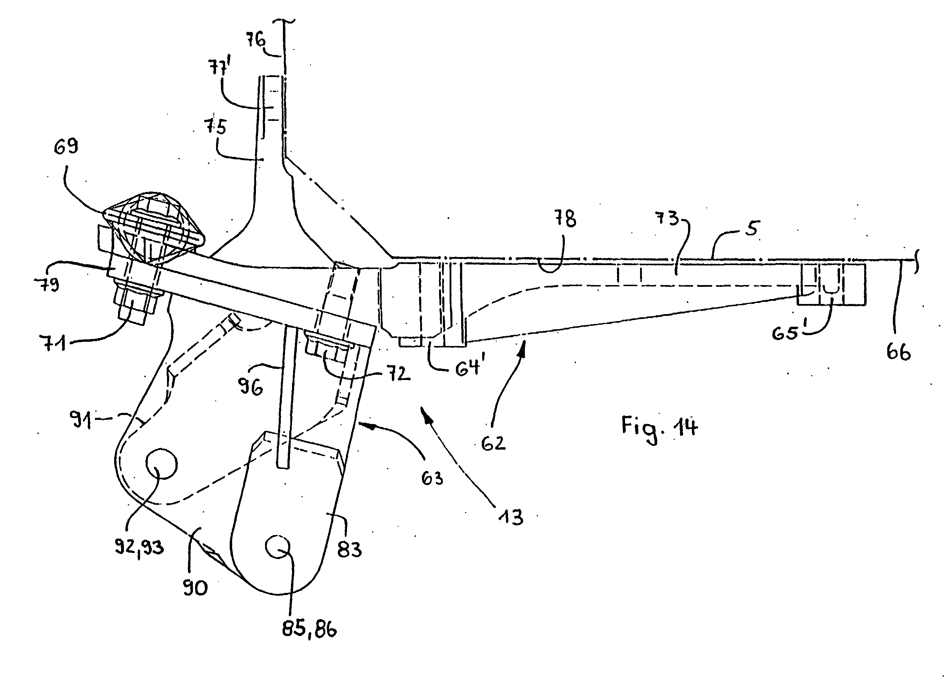

- Fig. 14: eine Ausführungsform einer Anschlußkonsole als Teil der vorderen Fahrerhaus-Lagerung in Seitenansicht,

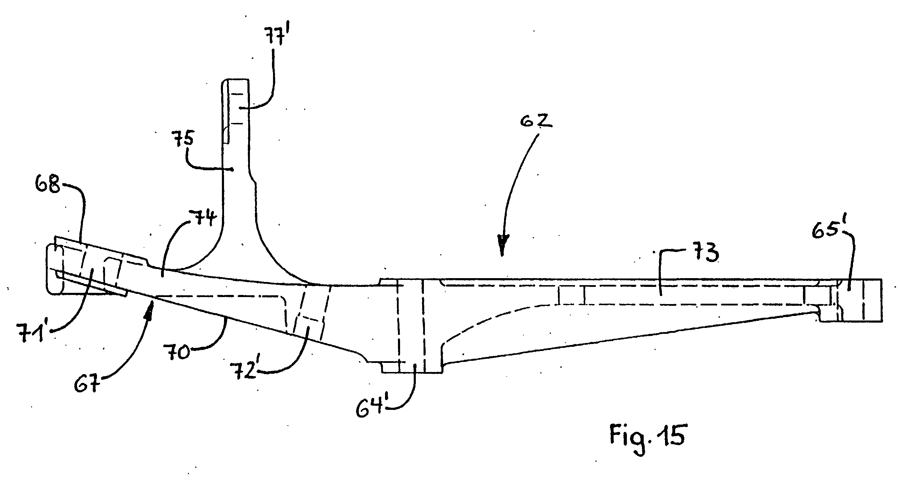

- Fig. 15: das obere Teil der Anschlußkonsole aus Fig. 14 in seitenansichtiger Alleindarstellung,

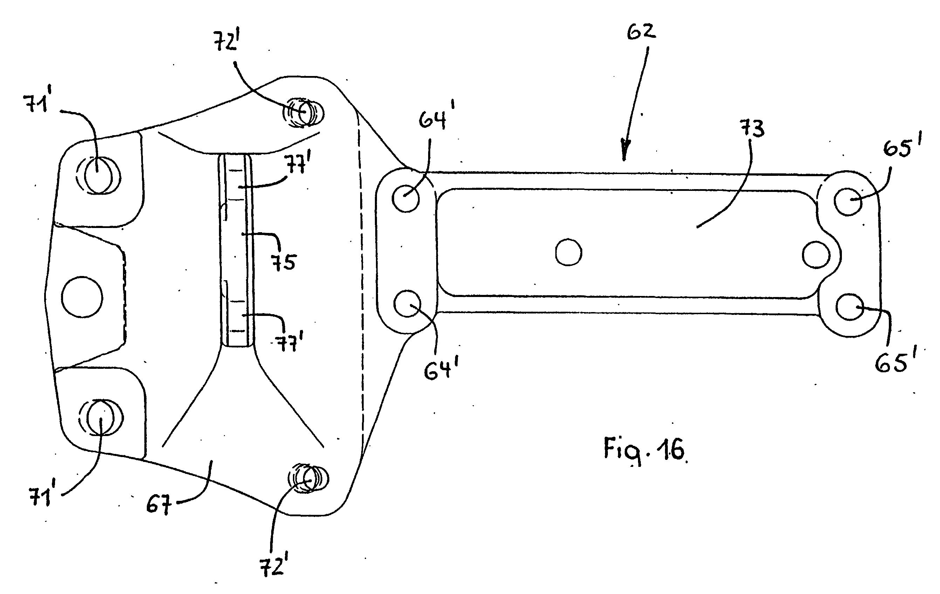

- Fig. 16: das obere Teil der Anschlußkonsole aus Fig. 14 in draufsichtiger Alleindarstellung,

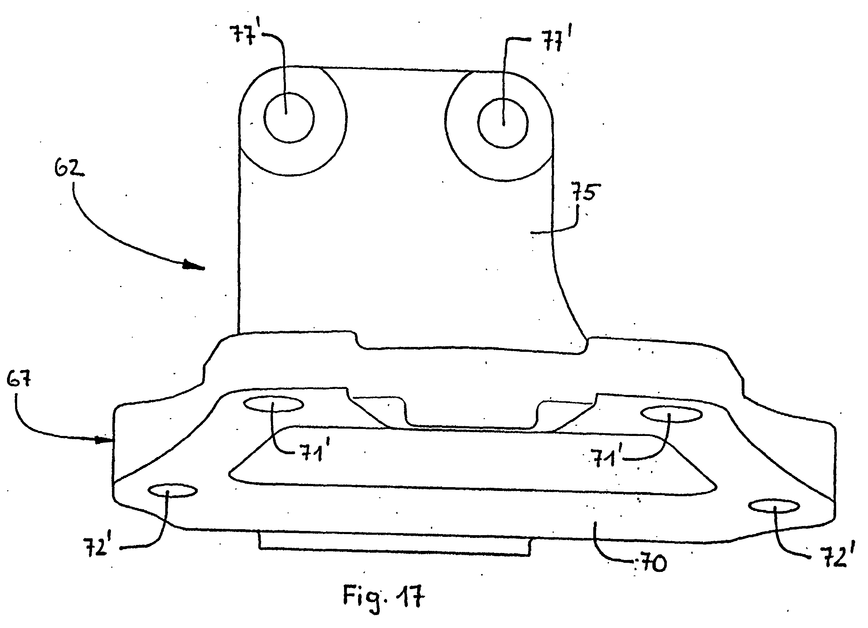

- Fig. 17: das obere Teil der Anschlußkonsole aus Fig. 14 in vorderansichtiger Alleindarstellung,

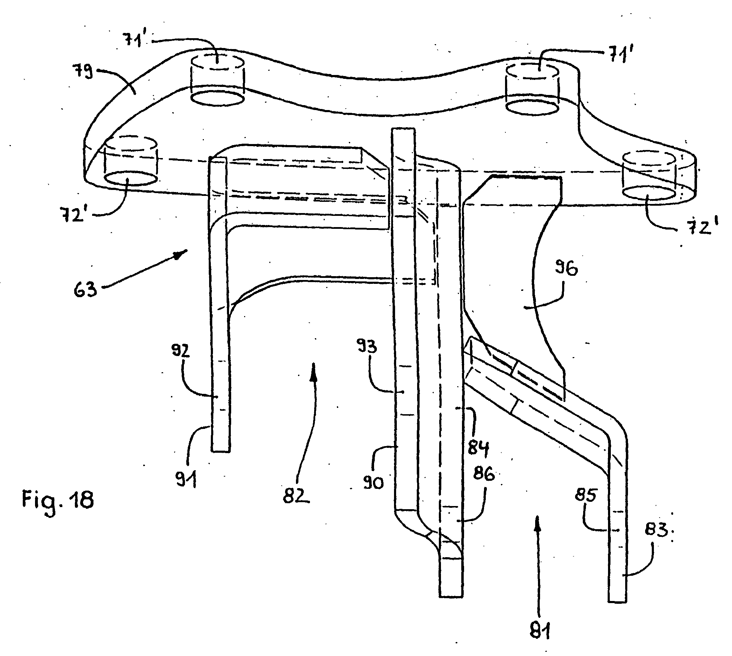

- Fig. 18: das untere Teil der Anschlußkonsole aus Fig. 14 in vorderansichtiger Alleindarstellung,

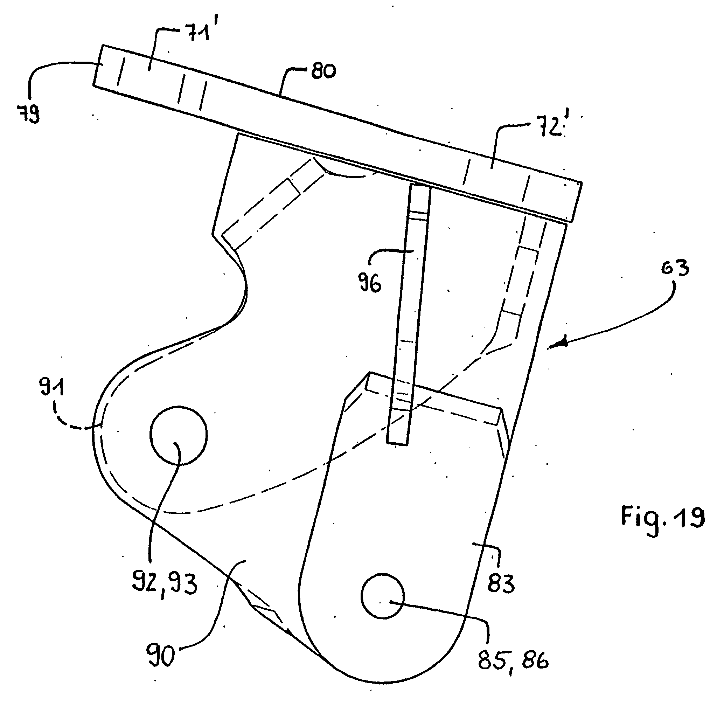

- Fig. 19: das untere Teil der Anschlußkonsole aus Fig. 14 in seitenansichtiger Alleindarstellung,

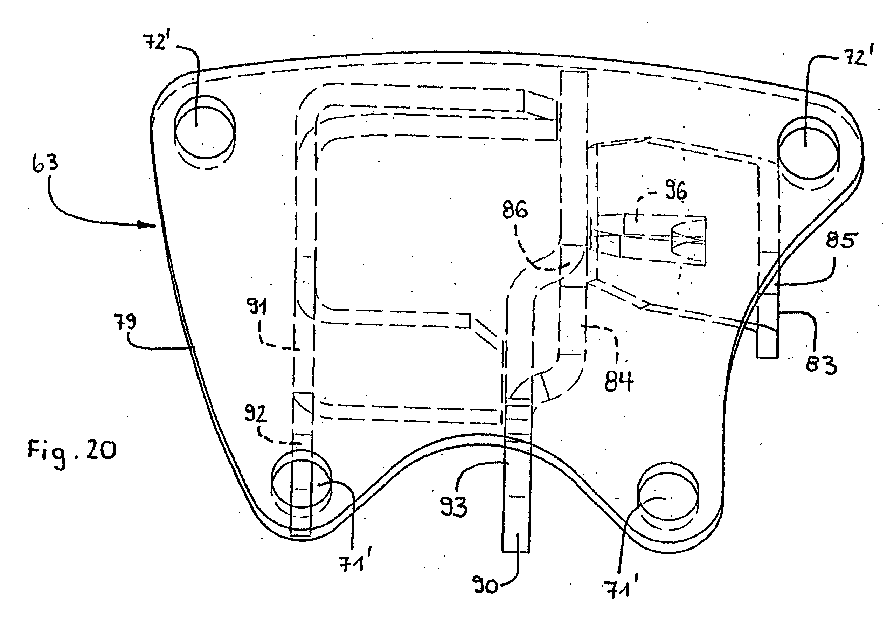

- Fig. 20: das untere Teil der Anschlußkonsole aus Fig. 14 in draufsichtiger Alleindarstellung,

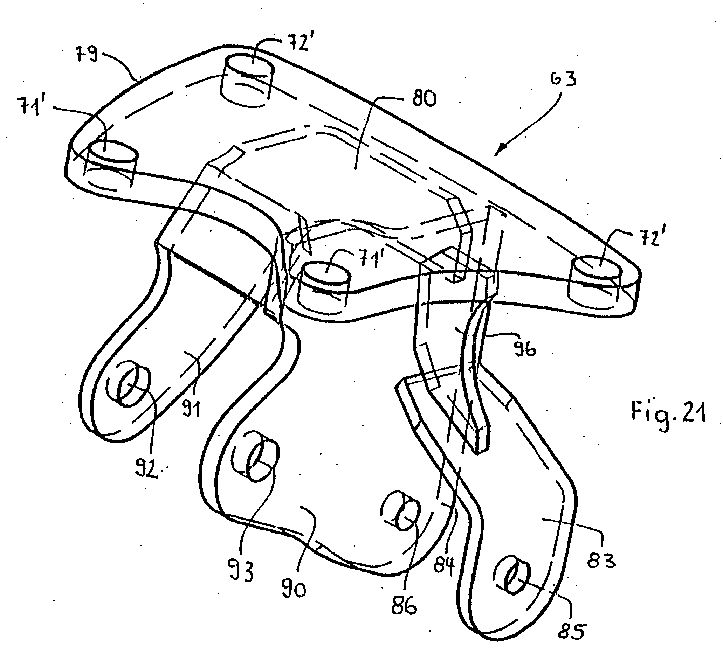

- Fig. 21: das untere Teil der Anschlußkonsole aus Fig. 14 in perspektivischer Ansicht von schräg vorne,
- Fig. 22: das Hauptteil eines hinteren Lagerbockes aus der Ausführungsform gemäß Fig. 2 bis 7 in Seitenansicht,
- Fig. 23: das Hauptteil eines hinteren Lagerbockes aus der Ausführungsform gemäß Fig. 2 bis 7 in Draufsicht,
- Fig. 24: das Hauptteil eines hinteren Lagerbockes aus der Ausführungsform gemäß Fig. 8 bis 10 in Seitenansicht,
- Fig. 25: das Hauptteil eines hinteren Lagerbockes aus der Ausführungsform gemäß Fig. 8 bis 10 in Draufsicht.

In den einzelnen Figuren sind gleiche beziehungsweise einander entsprechende Teile mit gleichem Bezugszeichen angezogen.

Von dem Lastkraftwagen sind als Teile von dessen Fahrgestell-Rahmen die beiden Rahmen-Längsträger mit 1 und 2 bezeichnet. Am vorderen Ende jedes derselben ist ein Multifunktionslagerschild 3, 4 befestigt. Diese vorderen Multifunktionslagerschilde 3, 4 dienen zur Aufnahme einer Vielzahl von Fahrzeugteilen, so auch solchen, die der vorderen Lagerung des Fahrerhauses 5 zuzurechnen sind.

Die vordere Fahrerhaus-Lagerung umfaßt folgende Bauteile, nämlich zwei Feder-Dämpfer-Beine 6, 7, eine von oben gesehen U-förmige Stabilisatorschwinge 8, zwei hintere Lagerböcke 9, 10, zwei Feder-Dämpfer-Bein-Halter 11, 12 und zwei vordere Anschlußkonsolen 13, 14. Die linksseitigen Bauteile der Fahrerhaus-Lagerung sind bezogen auf die Fahrzeuglängsachse spiegelsymmetrisch zu den rechtsseitigen Bauteilen ausgebildet und angeordnet.

Die U-förmige Stabilisatorschwinge 8 besteht aus einem rechten Längsarm 15, einem linken Längsarm 16, einer diese vorne miteinander verbindenden Querstange 17 und zwei, jeweils oberhalb des Übergangsbereiches zwischen Querstange 17 und einem Längsarm 15, 16 angeordneten Lageraugen 18, 19. In diese Lageraugen 18, 19 sind Lager 20, 21 eingebaut, deren Rotationsachsen in einer horizontalen Querlinie 22 zueinander fluchten. Außerdem ist am hinteren Ende jedes der beiden Längsarme 15, 16 der Stabilisatorschwinge 8 ebenfalls ein Lagerauge 23, 24 mit eingebautem Lager 25, 26 vorgesehen, deren Rotationsachsen ebenfalls in einer horizontalen Querlinie 27 zueinander fluchten, welche parallel zur Querlinie 22 verläuft.

Die U-förmige Stabilisatorschwinge 8 kann entweder als einstückiges Gesenkschmiede- oder Stahlgußteil realisiert oder alternativ hierzu aus drei vorgefertigten Einzelteilen zusammengesetzt sein. In letzterem Fall können die beiden Längsarme 15, 16 einschließlich aller Lageraugen und anderer Teile jeweils entweder durch ein Gesenkschmiede- oder Stahlgußteil und die Querstange 17 entweder durch ein Rohr oder ebenfalls ein vollmaterialiges Gesenkschmiedeteil gebildet sein. Nach entsprechender spanabhebender Nachbehandlung werden diese drei Teile dann miteinander verschweißt.

Die Längsarme 15, 16 der Stabilisatorschwinge 8 sind so geformt und angeordnet, daß sie bei einem Frontalcrashvorgang des Lastkraftwagen in Längsrichtung gezielt deformierbar sind und gleichzeitig eine energieabsorbierende Wirkung entfalten. Hierzu sind die Längsarme 15, 16 der Stabilisatorschwinge 8 zwischen vorderem und hinterem Ende - von der Seite betrachtet - leicht nach oben durchgebogen und - von oben betrachtet - ungerade, beispielsweise S-förmig oder Z-förmig ausgebildet, was bei einem Frontalcrashvorgang definiert verformbare Falt-, Biege- oder Knickzonen bedeutet. Vorzugsweise sind die beiden Längsarme 15, 16 innerhalb der U-förmigen Stabilisatorschwinge 8 gepfeilt zueinander in dem Sinne angeordnet, daß deren hintere Enden 23, 24 weniger weit voneinander beabstandet sind als deren vordere Enden 18, 19.

Die U-förmige Stabilisatorschwinge 8 ist über die hinten an den Längsarmen 15, 16 angeordneten Lageraugen 23, 24 und die darin eingebauten Lager 25, 26 längs- und quergeführt sowie um die Rotationsachse - Linie 27 - schwenkbar an den beiden Lagerböcken 9, 10 angelenkt. Jeder derselben ist hinten oben an einem der beiden Multifunktionslagerschilde 3, 4 lösbar befestigt, und zwar an seinem unteren Endbereich 28 durch zwei Schraubverbindungen 29, 30, wovon die eine (29) ganz vorne und die andere (30) ganz hinten angeordnet ist. Außerdem weist jeder hintere Lagerbock 9, 10 oberhalb dieser Befestigungszone 28, aber unterhalb der Anschlußebene für die Stabilisatorschwinge 8 eine im Frontalcrashfall des Lastkraftwagen definiert verformbare Falt- oder Knickzone auf, die durch konstruktive Maßnahmen wie Querschnittsreduzierungen, Materialschwächungen, Einbuchtungen, Einschnürungen oder dergleichen realisiert sein kann.

Im dargestellten Beispiel ist jeder Lagerbock 9, 10 aus zwei Teilen zusammengesetzt, einem definiert verformbaren Hauptteil 31 und einem vorne an diesem angeflanscht mittels Verschraubungen 32 befestigten Anschlußteil 33, an dem ein Längsarm 15 bzw. 16 der Stabilisatorschwinge 8 über das hintenendig gegebene Lagerauge und das darin eingebaute Lager quergeführt sowie über eine querdurchgehende Lagerachse bzw. -schraube 40 längsgeführt und schwenkbar angelenkt ist.

Sowohl das Hauptteil 31 als auch das Anschlußteil 33 eines Lagerbockes 9, 10 ist vorzugsweise durch jeweils ein Blechbiegeteil realisiert.

Bei Ausführung als Blechbiegeteil ist das Anschlußteil 33 jedes Lagerbockes 9, 10 in Draufsicht gesehen U-förmig gebogen und weist im einzelnen hinten eine ebene Anschlußplatte 34 mit mehreren Schraubendurchführungslöchern 35 sowie beidseitig an der Anschlußplatte 34 senkrecht nach vom und parallel zueinander angeordnet abgewinkelte Seitenwangen 36, 37 mit zueinander fluchtenden Bohrungen 38, 39 für Hindurchführung einer Lagerachse bzw. Lagerschraube 40 auf.

Das Hauptteil 31 eines Lagerbockes 9, 10 weist bei Ausführung als Blechbiegeteil eine ebene und leicht nach hinten geneigte vordere Anschlußplatte 41 mit mehreren Schraubendurchführungslöchern 42 für das vorderseitige Anflanschen und Befestigen des Anschlußteiles 33 mittels einer entsprechenden Anzahl von Schraubverbindungen 43 auf. An der vorderen Anschlußplatte 41 schließen sich beiderseits jeweils nach hinten abgewinkelte, parallel zueinander verlaufend angeordnete Seitenwangen 44, 45 an, in deren unterem Bereich Schraubendurchführungslöcher 46, 47 für die beiden Schraubverbindungen 29, 30 ausgebildet sind. Die zugehörigen Schraubendurchführungslöcher im jeweiligen Multifunktionslagerschild sind mit 46' und 47' bezeichnet.

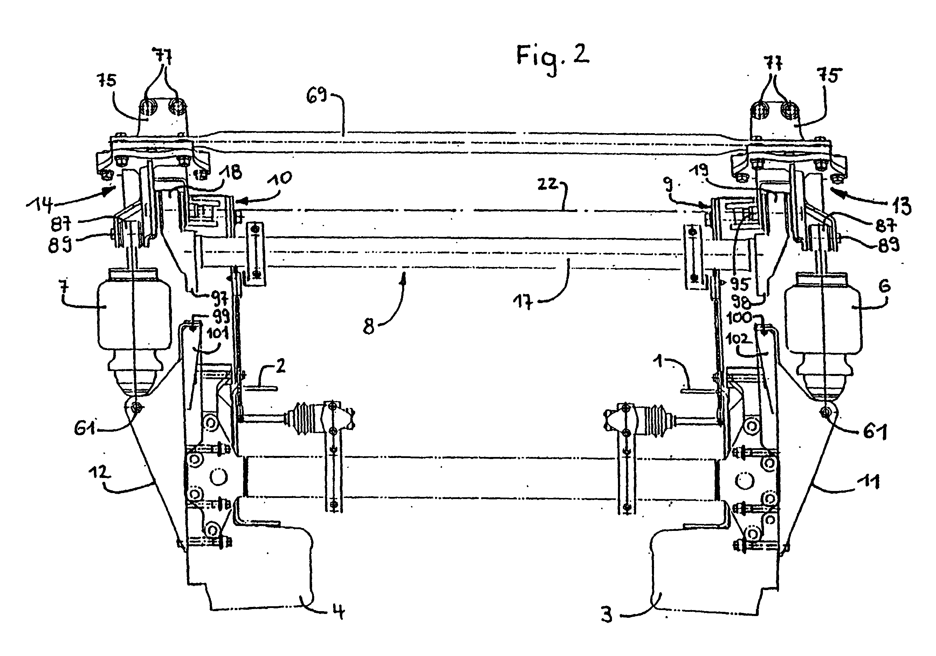

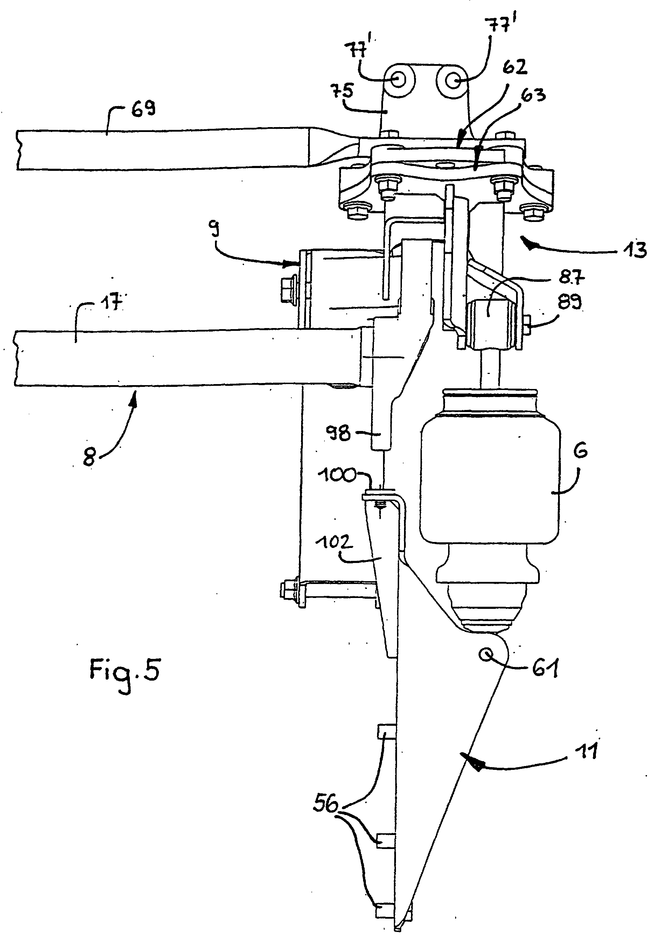

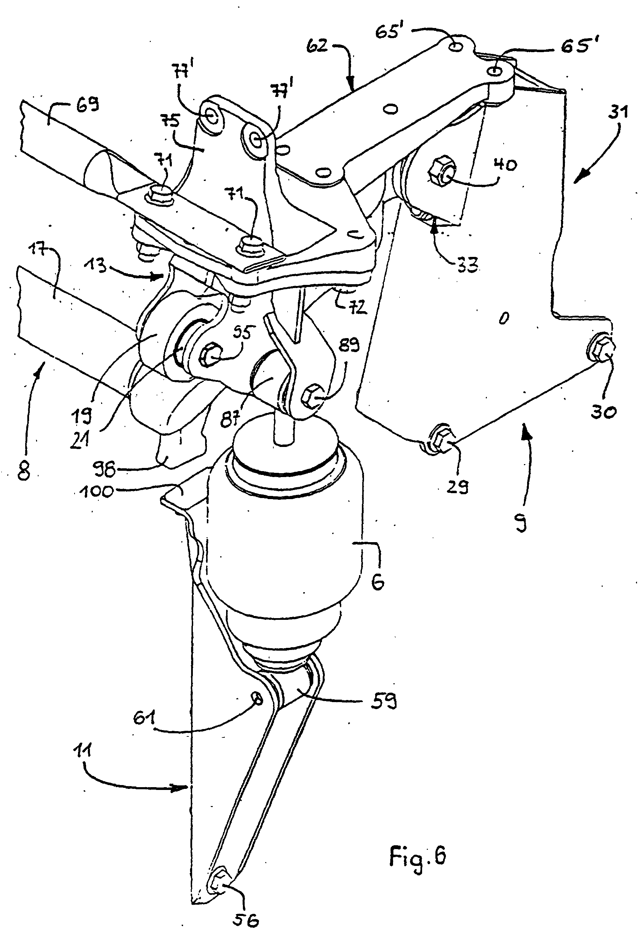

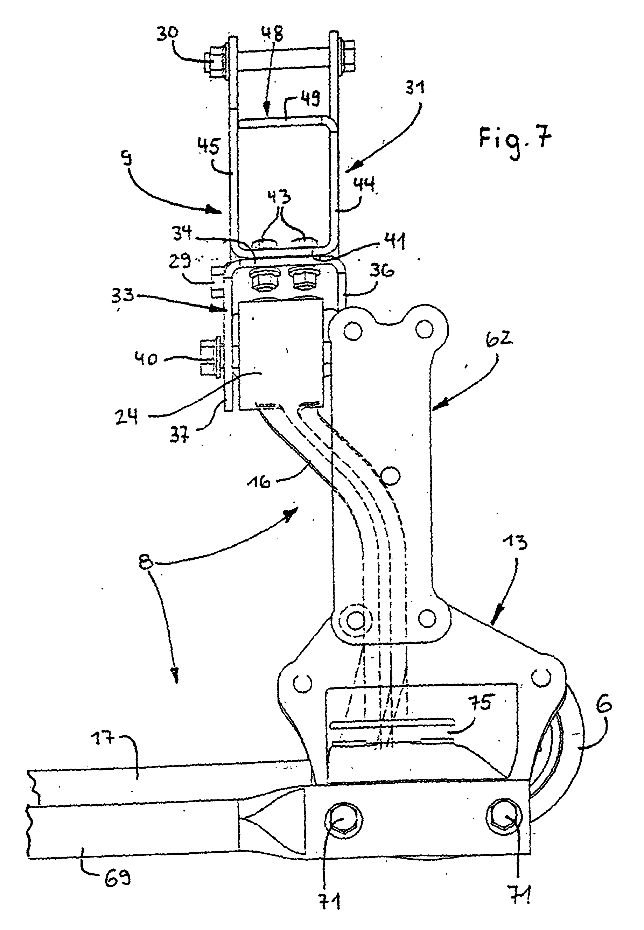

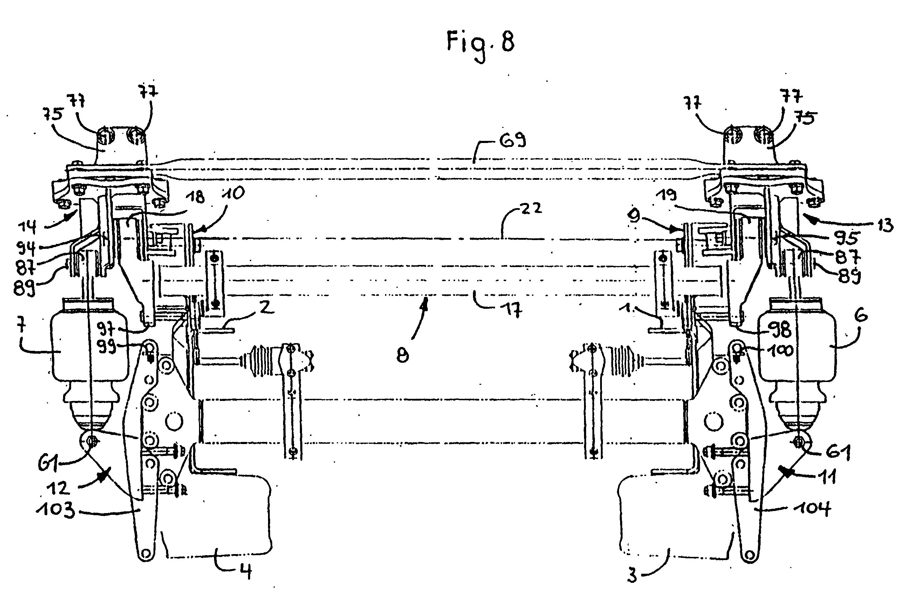

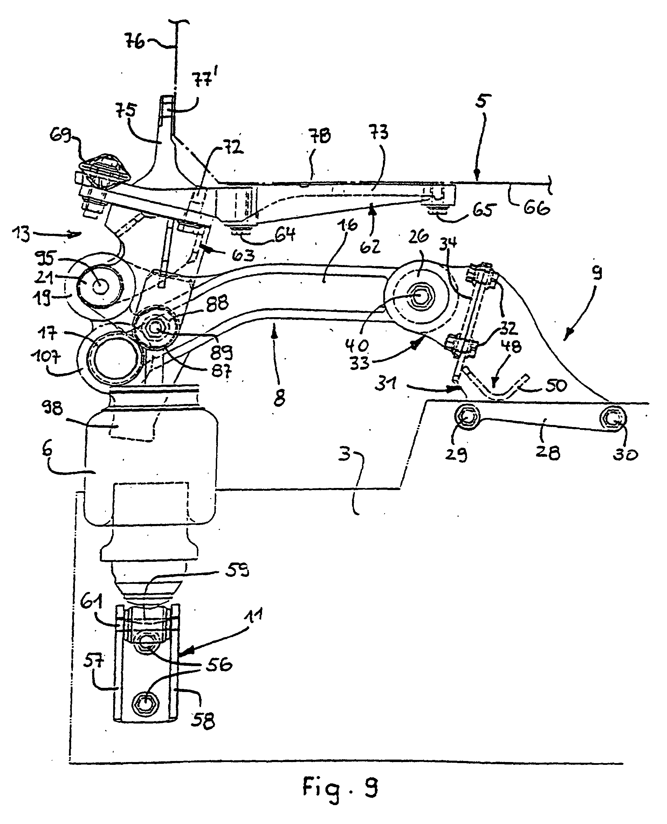

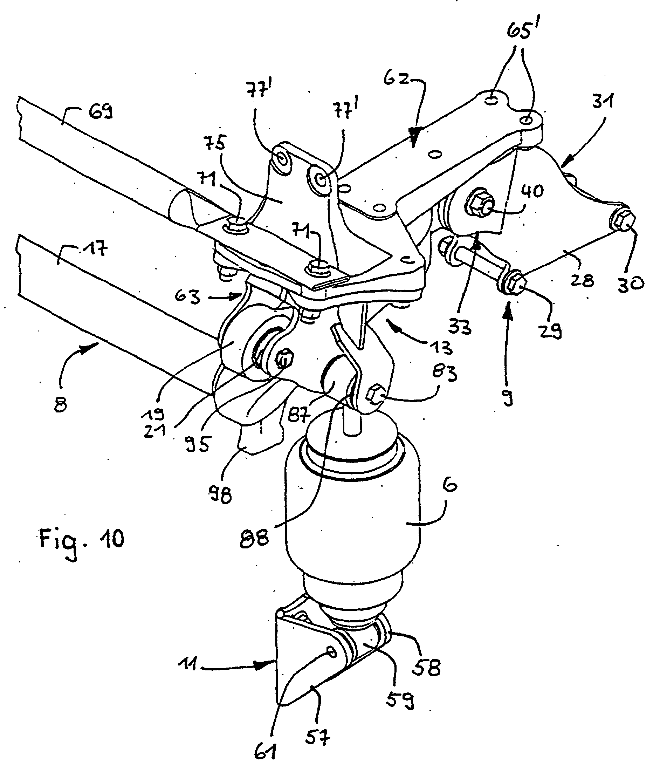

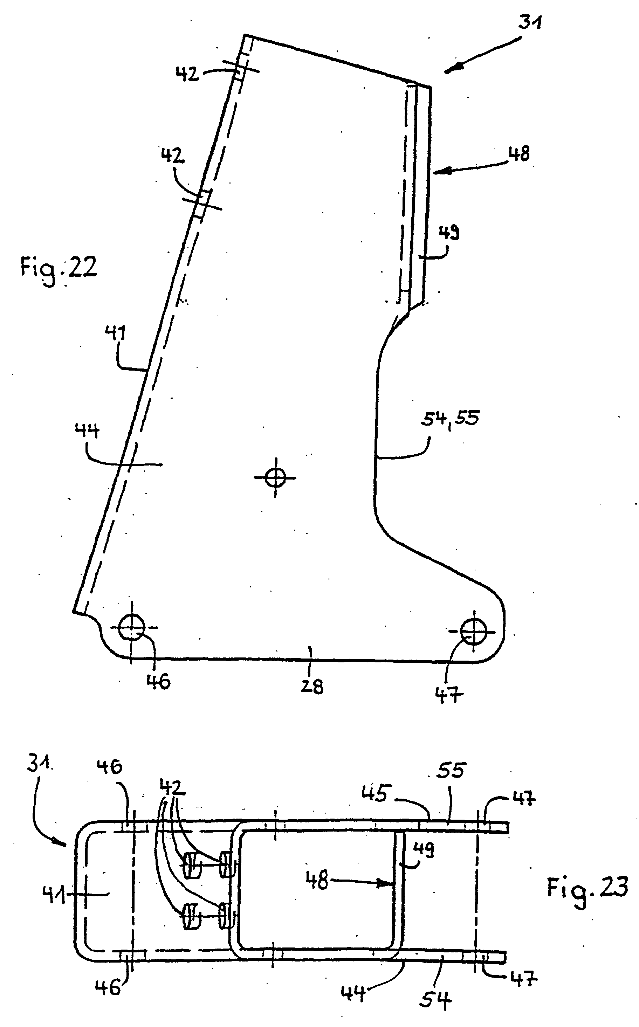

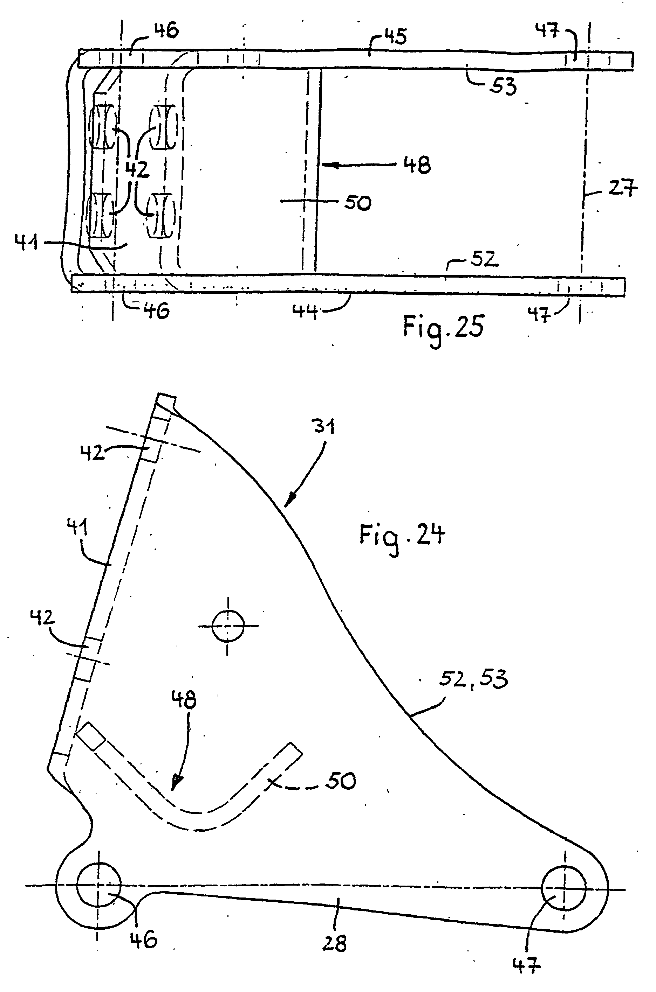

Darüber hinaus sind die beiden Seitenwangen 44, 45 des Hauptteils 31 eines Lagerbocks 9, 10 durch eine deren Abstand sicherstellende, nicht in der Deformationszone angeordnete Quertraverse 48 miteinander verbunden. Im Beispiel gemäß Figuren 2 bis 7 und 22, 23 ist die Quertraverse 48 durch eine hintenendig an einer Seitenwange 44 oder 45 zur gegenüberliegenden Seitenwange 45 bzw. 44 hin augewinkelte und sich an dieser abstützend angeschweißten Querwange 49 gebildet. Im Beispiel gemäß den Figuren 8 bis 10 und 24, 25 ist die Quertraverse 48 dagegen im vorderen Bereich des Hauptteils 31 eines jeden Lagerbockes 9, 10, aber räumlich hinter der vorderen Schraubverbindung 29 angeordnet und beispielsweise durch ein Winkelprofilstück 50 (wie dargestellt), einen Bolzen oder ein Rohrstück realisiert, das zwischen den beiden Seitenwangen 44, 45 sich erstreckend mit diesen verschweißt ist. In diesem Fall dient die Quertraverse 50 als Anschlag, der im Frontalcrashfall des Lastkraftwagen bei Deformation des hinteren Lagerbockes 9, 10 rotatorisch um die vordere Schraubverbindung 29 auf der Oberseite 51 des den Lagerbock 9 bzw. 10 aufnehmenden Multifunktionslagerschildes 3 bzw. 4 wegbegrenzend zur Anlage kommt.

Es besteht außerdem die Möglichkeit, den Abstand der vorderen Schraubendurchführungslöcher 46 zur Peripherie des Lagerbockes 9, 10 so zu bemessen und/oder die vordere Schraubverbindung 29, mit der ein Lagerbock 9 bzw. 10 am Multifunktionslagerschild 3 bzw. 4 befestigt ist, auf eine solche Grenzbelastung auszulegen, daß dann, wenn im Frontalcrashfall der während der Deformation mit seiner anschlagbildenden Quertraverse 50 an der Multifunktionslagerschild-Oberseite 51 zur Anlage gekommene und maximal bzw. weitestgehend deformierte Lagerbock 9 bzw. 10 weiterhin einer nach hinten gerichteten Horizontalkraft ausgesetzt ist, die vordere Verbindung sich auflöst, dabei der Lagerbock 9, 10 zur Peripherie hin ausreißt und/oder die vordere Schraubverbindung 29 abreißt und der Lagerbock 9 bzw. 10 sich dann rotatorisch um die hintere Schraubverbindung 30 nach hinten bis zum kompletten Überschlag verschwenken kann.

Die Verformung des Lagerbockes 9 bzw. 10 im Frontalcrashfall wird - wie bereits weiter vorne angedeutet - durch konstruktive Maßnahmen bewirkt. Im Beispiel gemäß Figuren 8 bis 10 und 24, 25 weist hierzu der Lagerbock 9 bzw. 10 auf der Rückseite seines Hauptteil 31 hintere Einbuchtungen 52, 53 an seinen Seitenwangen 44, 45 auf. Im Beispiel gemäß Figuren 2 bis 7 und 22, 23 weist der Lagerbock 9, 10 auf der Rückseite seines Hauptteils 31 unterhalb der Querwange 49 an seinen Seitenwangen 44, 45 hintere Einbuchtungen 54, 55 auf. Im Bereich der den Querschnitt in Längsrichtung gesehen reduzierenden Einbuchtungen 52, 53 bzw. 54, 55 knickt der Lagerbock 9, 10 im Frontalcrashfall bei von vorn wirkender Kraft, die oben über die Stabilisatorschwinge 8 her eingeleitet wird, ein.

Das Fahrerhaus 5 ist mit seinem Boden 66 vorne auf den beiden Anschlußkonsolen 13, 14 befestigt, mit diesen an den beiden Feder-Dämpfer-Beinen 6, 7 angelenkt und über diese gegenüber dem Fahrgestell-Rahmen 1, 2 abgefedert. Für die Abstützung der Feder-Dämpfer-Beine 6, 7 am Fahrgestell-Rahmen sind die beiden Feder-Dämpfer-Bein-Halter 11, 12 vorgesehen. Jeder derselben ist seitlich außen in gleicher Höhenlage an einem Multifunktionslagerschild 3 bzw. 4 lösbar mittels Schraubenlöcher 56' durchsetzender Schraubverbindungen 56 befestigt und nimmt zwischen zwei Seitenwangen 57, 58 quergeführt sowie schwenkbar das am unteren Ende eines Feder-Dämpfer-Beines 6 bzw. 7 angeordnete Lagerauge 59 mit eingebauten Lager 60 auf. Eine in Fahrzeuglängsrichtung quer durchgehende Lagerachse 61 stellt die Verbindung zwischen Lager 60 und Feder-Dämpfer-Bein-Halter 11 bzw. 12 her und bildet die Schwenkachse für das solchermaßen angelenkte Feder-Dämpfer-Bein 6 bzw. 7. Das obere Ende eines jeden Feder-Dämpfer-Beines 6, 7 ist in einer Anschlußkonsole 13 bzw. 14 gefaßt.

Jede der beiden Anschlußkonsolen 13, 14 ist aus zwei Teilen zusammengesetzt, nämlich einem oberen Tragteil 62, auf dem das Fahrerhaus 5 befestigt ist, und einem unteren Lagerteil 63, an dem ein Feder-Dämpfer-Bein 6 bzw. 7 und an anderer Stelle die Stabilisatorschwinge 8 mit einem der beiden an ihr angeordneten Lageraugen 18, 19 mit eingebauten Lagern 20, 21 angelenkt sind.

Das obere Tragteil 62 jeder Anschlußkonsole 13, 14 ist durch eine großflächige Platte gebildet, die mit ihrem hinteren Abschnitt 73 über mehrere Vertikalverschraubungen 64, 65 am Fahrerhaus-Boden 66 befestigt ist und mit einem vorderen Abschnitt 74 den Fahrerhaus-Boden 66 vorne um ein gewisses Maß überragt und eine schräge Stützrampe 67 bildet. An der freien Oberseite 68 der Stützrampe 67 bzw. des vorderen Abschnitts 74 ist eine die Lage der beiden Anschlußkonsolen 13, 14 stabilisierende Querstange 69 und an der schräg nach vorn oben ansteigenden Unterseite 70 der Stützrampe 67 ist ein Lagerteil 63 einer Anschlußkonsole 13, 14 jeweils mittels mehrerer vorderer und hinterer Vertikalverschraubungen 71, 72 befestigbar.

Die Oberseite eines jeden Anschlußkonsolen-Tragteils 62 ist im hinteren Abschnitt 73 eben ausgebildet und im vorderen Abschnitt 74 schräg nach oben hochgezogen, an dessen vorderstem Abschnitt 68 die Querstange 69 aufgelagert und befestigt ist. Die Dicke der Tragteil-Platte nimmt von hinten beginnend bis etwa zur Mitte ihrer Längserstreckung keilförmig bis zu einem Höchstmaß zu und dann von dieser dicksten Querschnittsstelle bis zum vorderen Ende wieder auf ein bestimmtes Maß ab, wobei dieser zuletzt genannte Bereich die Stützrampe 67 bildet.

Das Tragteil 62 jeder Anschlußkonsole 13, 14 weist am Übergang zwischen ebenem Plattenbereich und schrägen Stützrampenbereich einen nach oben abragenden Befestigungsflansch 75 auf, an dem der Fahrerhaus-Boden 66 mit einer hochgezogenen Vorderkante 76 auf Anschlag angeschlossen und mittels mehrerer Horizontalverschraubungen 77 befestigt ist. Die zugehörigen Schraubenlöcher sind mit 77' bezeichnet. Der sich nach hinten anschließende Fahrerhaus-Boden-Bereich 78 ist auf der ebenen Oberseite des hinteren Abschnitts 73 des Anschlußkonsolen-Tragteils 62 aufgelagert und dort mittels der Vertikalverschraubungen 64, 65 festgespannt, wobei die vorderen Vertikalverschraubungen 64 im Bereich der größten Plattendicke und die Vertikalverschraubungen 65 am hinteren Platten-Endbereich angeordnet sind. Die zugehörigen Schraubenlöcher sind mit 64' bzw. 65' bezeichnet

Das Lagerteil 63 jeder Anschlußkonsole 13, 14 weist oben eine Stirnplatte 79 mit ebener Oberseite 80 auf, mit der es an der ebenen Unterseite 70 der Stützrampe 67 eines Anschlußkonsolen-Tragteils 62 angeflanscht und dort mittels der Vertikalverschraubungen 71, 72 festgespannt ist. Die zugehörigen Schraubenlöcher in den Platten 67 und 79 sind mit 71' bzw. 72' bezeichnet.

Die vorderen Vertikalverschraubungen 71, mit denen das Lagerteil 63 jeder Anschlußkonsole 13, 14 mit seiner Stirnplatte 79 an 'der Stützrampe 67 eines Anschlußkonsolen-Tragteils 62 festgespannt ist, werden vorzugsweise auch zur Befestigung der Querstange 69 vorne am Tragteil-Oberseitenabschnitt 74 herangezogen.

Das Lagerteil 63 jeder Anschlußkonsole 13, 14 weist außer der Stirnplatte 79 ein von dieser nach unten beabstandetes erstes äußeres Maul 81 sowie ein zweites, weiter oben, aber ebenfalls von der Stirnplatte 79 nach unten beabstandetes inneres Maul 82 auf. Das äußere Maul 81 ist seitlich von Wänden 83, 84 mit diese durchsetzenden, horizontal quer fluchtenden Bohrungen 85, 86 begrenzt und dient zur seitengeführten Aufnahme sowie Lagerung des aus einem Lagerauge 87 mit eingebauten Lager 88 bestehenden oberen Endes eines Feder-Dämpfer-Beines 6 bzw. 7 mittels einer querdurchgehenden Lagerachse 89 am Lagerteil 63 einer Anschlußkonsole 13, 14. Das innere Maul 82 in jedem Anschlußkonsolen-Lagerteil 63 ist ebenfalls seitlich durch Wände 90, 91 mit diese durchsetzenden, horizontal quer fluchtenden Bohrungen 92, 93 begrenzt und dient zur seitengeführten Aufnahme und Lagerung eines vorderendig an der Stabilisatorschwinge 8 angeordneten Lagerauges 18 bzw. 19 samt darin eingebautem Lager 20 bzw. 21 mittels einer querdurchgehenden Lagerachse 94 bzw. 95 am Lagerteil 63 einer Anschlußkonsole 13, 14.

Im dargestellten Beispiel sind die innere Begrenzungswand 84 des ersten äußeren Maules 81 und die äußere Begrenzungswand 90 des zweiten inneren Maules 82 durch eine einzige gemeinsame Zwischenwand gebildet. Alle maulbegrenzenden Wände 83, 84, 90, 91 sind an der Unterseite der oberen Stirnplatte 79 abgestützt angeschlossen.

Das untere Lagerteil 63 jeder Anschlußkonsole 13, 14 kann entweder durch ein Stahlgußteil oder durch eine Schweißkonstruktion aus mehreren miteinander verschweißten Stahlblechen realisiert sein. In letzterem Fall ist die äußere Begrenzungswand 83 des äußeren Mauls 81 zur inneren Begrenzungswand 84 hin gebogen, dort angeschweißt und außerdem durch eine Vertikalrippe 96 zur Stirnplatte 79 hin abgestützt.

Das obere Tragteil 62 jeder Anschlußkonsole 13, 14 ist vorzugsweise durch ein Sphärogußteil realisiert.

Die vorderen Vertikalverschraubungen 71, mit denen das Lagerteil 63 jeder Anschlußkonsole 13, 14 mit seiner oberen Stirnplatte 79 an der Stützrampe 67 eines Anschlußkonsolen-Tragteils 62 festgespannt ist, sind vorzugsweise auf eine solche Grenzbelastung ausgelegt, daß dann, wenn im Frontalcrashfall des Lastkraftwagens verschiedene Deformationszonen in den Fahrerhaus-Lagerorganen 9, 10, 15, 16 bis an ihre vorgegebenen Grenzen verformt sind, die besagten vorderen Vertikalverschraubungen 71 abreißen, die benachbarten hinteren Vertikalverschraubungen 72 aber nur gedehnt werden und jedes Anschlußkonsolen-Lagerteil 63 sich dann rotatorisch um diese hinteren Vertikalverschraubungen 72 bewegen kann, wodurch sich ein Axialversatz der von der Stirnplatte 63 nach unten beabstandeten Feder-Dämpfer-Bein- und Stabilisatorschwinge-Anlenkstellen 81, 82 nach hinten ergibt.

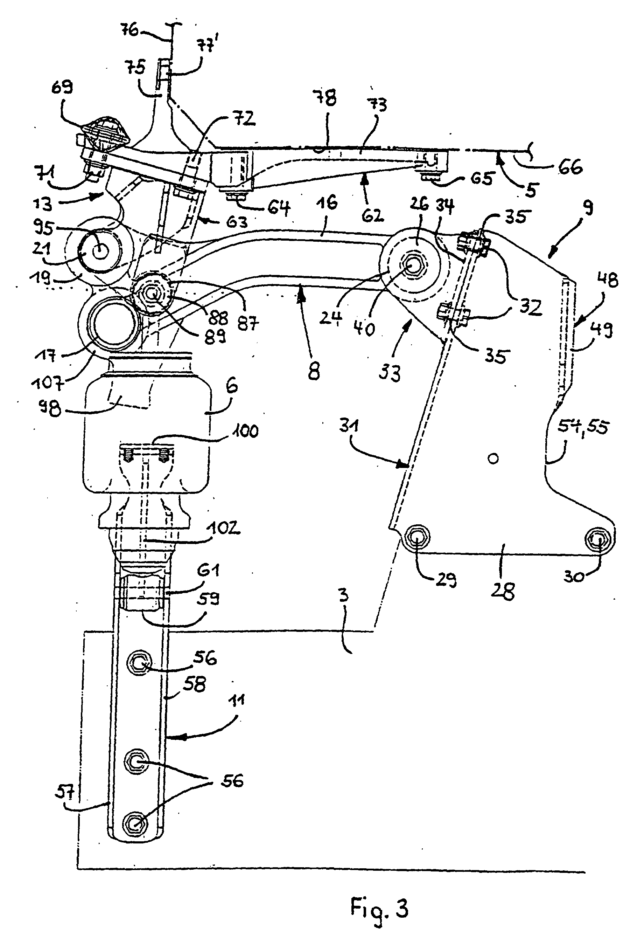

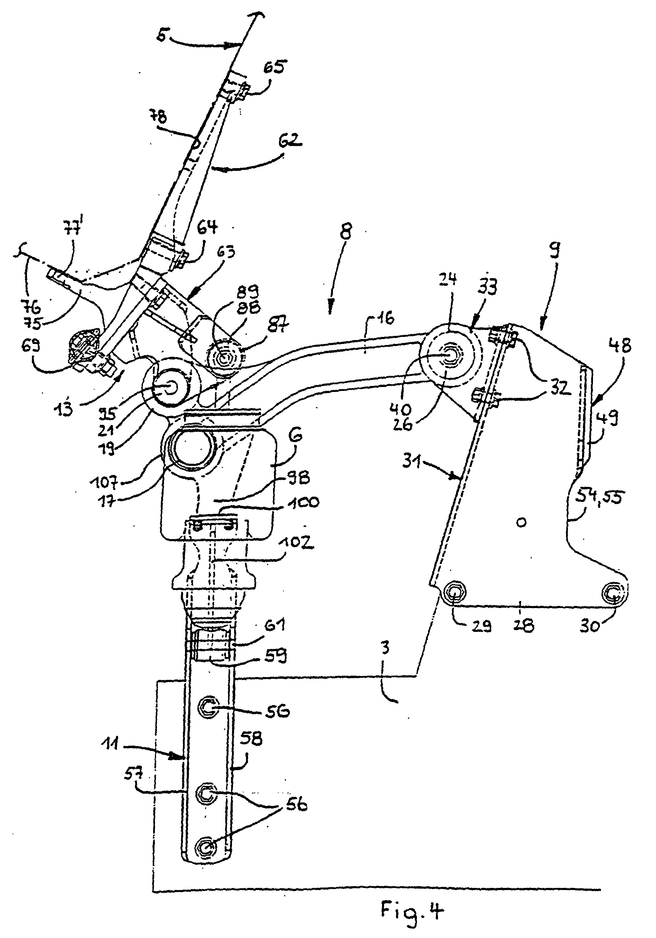

Die vordere Fahrerhaus-Lagerung verfügt auch über eine das Einfedern des Fahrerhauses beim Kippen begrenzende Einrichtung. Diese besteht aus zwei gleichlangen Anschlagfüßen 97, 98, von denen jeder unten abragend am vorderen Ende jeweils eines Längsarmes 15, 16 der U-förmigen Stabilisatorschwinge 8 angeordnet ist, und zwei zugehörigen rahmenfest angeordneten Anschlägen 99, 100. Im Fall des Ausführungsbeispiels gemäß Fig. 2 bis 7 ist der Anschlag 99 bzw. 100 durch eine austauschbare Anschlagplatte gebildet, die an einem hochgezogenen, durch einen Quersteg gebildeten oberen Ende eines Feder-Dämpfer-Bein-Halters 11 bzw. 12 gegebenenfalls elastisch nachgiebig oder abgefedert befestigt ist, wobei der die Anschlagplatte tragende Halter-Quersteg und die hochgeführte Halter-Wand durch eine mit ihnen verschweißte Versteifungsrippe 101 bzw. 102 unterstützt sind. Fig. 3 zeigt das Fahrerhaus in ungekippter Position und dabei die Anschlagfüße 97, 98 in einem solchen Abstand von den zugehörigen Anschlägen 99 bzw. 100, daß das normale Einfedern des Fahrerhauses 5 während der Fahrt nicht behindert wird. Fig. 4 dagegen zeigt das Fahrerhaus 5 in maximal gekippter Stellung, in der die Anschlägfüße 97 bzw. 98 auf den Anschlägen 99 bzw. 100 aufsitzen und so das weitere Einfedern der Feder-Dämpfer-Beine 6, 7 behindern. Während dieses Fahrerhaus-Kippvorganges beschreiben die Anschlagfüße 97, 98 eine rotatorische Bewegung um die Rotationsachse 27, die durch die hinterendigen Lager-Verschraubungen 40 der U-förmigen Stabilisatorschwinge 8 mit den Lagerböcken 9, 10 geht.

Im Fall des Ausführungsbeispiels gemäß Fig. 8 bis 10 ist der Anschlag 99, 100 nicht am Feder-Dämpfer-Bein-Halter 11 bzw. 12, sondern an einem eigenen Halter 103 bzw. 104 angeordnet, der wiederum an einem der beiden Multifunktionslagerschilde 3 bzw. 4 befestigt ist und im übrigen noch anderen, hier nicht interessierenden Zwecken dient. Die Lage, Ausbildung und Befestigungsart der Anschlagplatten sind gleich wie im vorgeschilderten Fall.

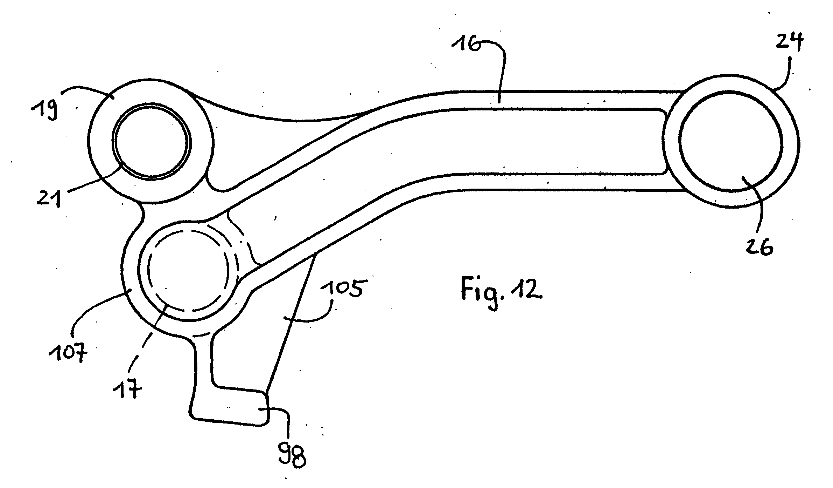

Die Anschlagfüße 97, 98 sind vorzugsweise jeweils einstückig mit den Längsarmen 15, 16 der U-förmigen Stabilisatorschwinge 8 ausgebildet und rückseitig - wie aus Fig. 12 ersichtlich - durch eine Strebe 105 zum jeweiligen Längsarm 15 bzw. 16 hin versteift. Der jeweilige Anschlagfuß 97 bzw. 98 geht dabei unten an einem längsarm-vorderendigen Aufnahmeauge 106, 107 ab, in dessen innenseitige Sackbohrung das zugehörige Ende der Querstange 17 form- und gegebenenfalls auch kraftschlüssig eingesetzt und anschließend angeschweißt ist.

Die vorbeschriebene erfindungsgemäße Bauweise der vorderen Fahrerhaus-Lagerung hat eine Reihe von Vorteilen, auf die nachfolgend eingegangen ist.

Sie ist komfortabel, kostengünstig, montagefreundlich, verspannungsfrei und crashoptimiert.

Der Komfort wird durch große Federwege erreicht. Da das hintere Lager der Stabilisatorschwinge rahmenseitig in einem "ruhigen" Bereich des Fahrgestellrahmens angeordnet ist, ergibt sich auch eine Querschüttelverbesserung. Die Trennung der Komfortlager vom Drehlager für Kippen gewährleistet eine optimale Auslegung.

Die Kostensenkung wird dadurch erzielt, daß gegenüber bisherigen Fahrerhaus-Lagerungen verschiedene Teile entfallen.

Die Verbesserung der Montagefreundlichkeit ergibt sich dadurch, daß eine sehr gute Zugangsmöglichkeit zur Verbindungsstelle Fahrerhaus-Fahrgestellrahmen beim Fahrerhausaufsetzen gegeben ist.

Die Verspannungsfreiheit wird dadurch erzielt, daß Ausgleichsmöglichkeiten zwischen Stabilisatorschwinge und Fahrgestellrahmen einerseits sowie Fahrerhaus andererseits gegeben sind.

Die Crashoptimierung erfolgt durch energieverzehrende Ausgestaltung und/oder Anordnung verschiedener Lagerteile. Hierzu nachfolgend einige Anmerkungen.

Die hinteren Lagerböcke 9, 10 erfahren im Crashfall ab einem bestimmten Beanspruchungsniveau an den vorgesehenen Stellen örtlich starke Verformungen, wodurch eine Verlagerung der hinteren Stabilisätorschwingen-Lagerstellen nach hinten und unten erfolgt. Je nach Größe der von vorne auf das Fahrerhaus einwirkenden Kraft kann dann sogar ein Überschlagen der Stabilisatorschwinge 8 nach hinten erfolgen. Aufgrund dieses durch gezielte Bauteilauslegung bewirkten Effekts läßt sich im Crasfali eine größtmögliche Verschiebung des Fahrerhauses nach hinten gegenüber dem Fahrgestell erzielen als Kombination aus der Bogenbewegung der Stabilisatorschwingenlagerpunkte um eine tiefliegende Drehachse und der doppelten Stabilisatorschwingenarmlänge aus der Stabilisatorschwingen-Überschlagbewegung. Dabei bleibt während dieses gesamten Bewegungsablaufes eine feste Verbindung zwischen Fahrerhaus und Fahrgestell erhalten.

Bei der Version gemäß Fig. 2 bis 7, 22, 23 bauen die hinteren Lagerböcke 9, 10 relativ hoch, wobei deren Höhe z. B. das Doppelte der Länge im Bereich der unteren Anschlußzone 28 beträgt. Dieses begünstigt wegen der im Bereich des oberen Endes jedes Lagerbockes 9, 10 liegenden Anschlußstelle 40 der Stabilisatorschwinge 8 die Verformung der Lagerböcke 9, 10 in den konstruktiv vorgegebenen Bereichen.

Bei der Version gemäß Fig. 8 bis 10, 24, 25 bauen die hinteren Lagerböcke 9, 10 nicht so hoch, ihre Höhe entspricht hier z. B. der Lagerbock-Länge im Anschlußbereich 28. Dies hat zur Folge, daß hier im Crashfall ein kürzerer Hebelarm wirksam ist. Die Verformung ist daher bei diesen niedrigeren Lagerböcken 9, 10 nicht so stark wie bei jenen der anderen Version. Dafür ist hier ein Abriß der Lagerböcke 9, 10 im Bereich der vorderen Verschraubungen 29 vorgesehen, wobei dieser Abriß durch den Anschlag 48 und den hierdurch gegebenen Hebelarm zwischen dessen Anschlagstelle am Multifunktionslagerschild 3, 4 und der vorderen Verschraubung 29 unterstützt wird. Es erfolgt dann nach ihrem Abriß im Bereich der vorderen Schraubverbindung 29 ein rotatorischer Überschlag der Lagerböcke 9, 10 um die hinteren Schraubverbindungen 30 nach hinten sowie - je nach Stärke der Krafteinwirkung von vorne - auch hier ein Überschlag der Stabilisatorschwinge 8 mit einem entsprechenden Axialversatz des Fahrerhauses nach hinten. Auch hierbei bleibt während des gesamten besagten Bewegungsablaufes die Verbindung zwischen Fahrerhaus und Fahrgestell erhalten.

Da diese Funktion und Verhaltensweisen durch Crashversuche mit gebauten Lastkraftwagen-Prototypen bewiesen wurden, ergibt sich ein bisher noch nicht in der Praxis dargestellter Sicherheitsstandard im Bereich Fahrerhaus und Insassensicherheit.

## Patentansprüche

1. Vordere Lagerung des kippbaren Fahrerhauses eines Lastkraftwagens, bei der das Fahrerhaus (5) vorne auf zwei Anschlusskonsolen (13, 14) befestigt und über eine aus zwei längsarmen (15, 16) und einer Querstange (17) gebildete U-förmige Stabilisatorschwinge (8) am Fahrgestell-Rahmen (1, 2), dort an Lagerböcken (9, 10) angelenkt sowie gegenüber dem Fahrgestell-Rahmen (1, 2) durch zwei unten an jeweils einem Feder-Dämpfer-Bein-Halter (11, 12) angelenkte Feder-Dämpfer-Beine (6, 7) abgefedert ist, **dadurch gekennzeichnet, dass** jedes Feder-Dämpfer-Bein (6, 7) oben direkt an einer Anschlusskonsole (13, 14) angelenkt ist, und dass jede der beiden Anschlusskonsolen (13, 14) aus zwei Teilen zusammengesetzt ist, nämlich einem oberen Tragteil (62), auf dem das Fahrerhaus (5) befestigt ist, und einem unteren Lagerteil (63), an dem an einer Stelle ein Feder-Dämpfer-Bein (6, 7) und an einer anderen Stelle die Stabilisatorschwinge (8) mit einer von zwei an ihr vorne links bzw. rechts angeordneten Lagerstellen (18 bzw. 19) angelenkt ist.

2. Vordere Fahrerhaus-Lagerung nach Anspruch 1, **dadurch gekennzeichnet, daß** das Fahrerhaus (5) über die Anschlußkonsolen (13, 14) durch deren Lagerteile (63) quergeführt und kippbar am vorderen Ende der Stabilisatorschwinge (8) angelenkt ist, über in deren Lageraugen (18, 19) eingebaute Lager (20, 21) mit in einer Horizontallinie zueinander fluchtend in den Lagerteilen (63) der Anschlußkonsolen (13, 14) gefaßten Lagerachsen (94, 95).

3. Vordere Fahrerhaus-Lagerung nach einem der vorhergehenden Ansprüche, **dadurch gekennzeichnet, daß** das obere Tragteil (62) jeder Anschlußkonsole (13, 14) durch eine großflächige Platte gebildet ist, die mit ihrem hinteren Abschnitt (73) über mehrere Vertikalverschraubungen (64, 65) am Fahrerhaus-Boden (66) befestigt ist und mit einem vorderen Abschnitt (74) den Fahrerhaus-Boden (66) vorne um ein gewisses Maß überragt und eine schräge Stützrampe (67) bildet, an deren freier Oberseite (68) eine die Lage der beiden Anschlußkonsolen (13, 14) stabilisierende Querstange (69) und an deren schräg nach vorn oben ansteigender Unterseite (70) ein Lagerteil (63) mittels mehrerer vorderer und hinterer Vertikalverschraubungen (71, 72) befestigbar ist.

4. Vordere Fahrerhaus-Lagerung nach Anspruch 3, **dadurch gekennzeichnet, daß** die Oberseite im hinteren Abschnitt (73) eines jeden Anschlußkonsolen-Tragteils (62) horizontal eben ausgebildet und im vorderen Abschnitt (74) schräg nach oben hochgezogen ist, wobei an deren vorderstem Abschnitt (68) die Querstange (69) auflagert und befestigt ist, und daß die Dicke des Tragteils (62) von hinten beginnend bis etwa zur Mitte seiner Längserstreckung keilförmig bis zu einem Höchstmaß zunimmt und dann von dieser dicksten Querschnittsstelle bis zum vorderen Ende wieder auf ein bestimmtes Maß abnimmt, wobei dieser zuletzt genannte Bereich die Stützrampe (67) bildet.

5. Vordere Fahrerhaus-Lagerung nach einem der vorhergehenden Ansprüche, **dadurch gekennzeichnet, daß** das Tragteil (62) jeder Anschlußkonsole (13, 14) am Übergang zwischen ebenem Plattenbereich (73) und schrägem Stützrampenbereich (74) einen nach oben abragenden Befestigungsflansch (75) aufweist, an dem der Fahrerhaus-Boden (66) mit einer hochgezogenen Vorderkante (76) auf Anschlag angeschlossen und mittels mehrerer Horizontalverschraubungen (77) befestigt ist, während der sich nach hinten anschließende Fahrerhaus-Boden-Bereich (78) auf der ebenen Oberseite des hinteren Abschnitts (73) des Anschlußkonsolen-Tragteils (62) aufgelagert und dort mittels mehrerer im Bereich der größten Dicke angeordneter Vertikalverschraubungen (64) und am hinteren Endbereich angeordneter Vertikalverschraubungen (65) festgespannt ist.

6. Vordere Fahrerhaus-Lagerung nach einem der Ansprüche 3 und 4, **dadurch gekennzeichnet, daß** das Lagerteil (63) jeder Anschlußkonsole (13, 14) oben eine Stirnplatte (79) mit ebener Oberseite (80) aufweist, mit der es an der ebenen Unterseite (70) der Stützrampe (67) eines Anschlußkonsolen-Tragteils (62) angeflanscht und dort mittels der Vertikalverschraubungen (71, 72) festgespannt ist.

7. Vordere Fahrerhaus-Lagerung nach Anspruch 6, **dadurch gekennzeichnet, daß** die vorderen Vertikalverschraubungen (71), mit denen das Lagerteil (63) jeder Anschlußkonsole (13, 14) mit seiner oberen Stimplatte (79) an der Stützrampe (67) eines Anschlußkonsolen-Tragteils (62) festgespannt ist, gleichzeitig auch zur Befestigung der Querstange (69) vorne am Tragteil-Oberseiten-Abschnitt (68) herangezogen werden.

8. Vordere Fahrerhaus-Lagerung nach einem der vorhergehenden Ansprüche, **dadurch gekennzeichnet, daß** das Lagerteil (63) jeder Anschlußkonsole (13, 14) außer einer oberen Stirnplatte (79), mit der es an der Stützrampe (67) des Anschlußkonsolen-Tragteils (62) angeflanscht ist, ein von der Stirnplatte (79) nach unten beabstandetes erstes äußeres Maul (81) mit seitlichen Begrenzungswänden (83, 84) und diese quer durchsetzenden Bohrungen (85, 86) für die seitengeführte Aufnahme und Lagerung des oberen Endes (87, 88) eines Feder-Dämpfer-Beines (6, 7) mittels einer querdurchgehenden Lagerachse (89) sowie ein zweites, weiter oben, aber ebenfalls von der Stirnplatte (79) nach unten beabstandet angeordnetes inneres Maul (82) mit seitlichen Begrenzungswänden (90, 91) und diese quer durchsetzenden Bohrungen (92, 93) für die seitengeführte Aufnahme und Lagerung eines vorderendig an der Stabilisatorschwinge (8) angeordneten Lagerauges (18, 19) über das darin eingebaute Lager (20, 21) und eine querdurchgehende Lagerachse (94, 95) aufweist.

9. Vordere Fahrerhaus-Lagerung nach Anspruch 8, **dadurch gekennzeichnet, daß** die innere Begrenzungswand (84) des äußeren Maules (81) und die äußere Begrenzungswand (90) des inneren Maules (82) jedes Anschlußkonsolen-Lagerteils (63) durch eine einzige, gemeinsame Zwischenwand gebildet und alle maulbegrenzenden Wände an der Unterseite der oberen Stirnplatte (79) abgestützt angeschlossen sind.

10. Vordere Fahrerhaus-Lagerung nach einem der vorhergehenden Ansprüche, **dadurch gekennzeichnet, daß** das Lagerteil (63) jeder Anschlußkonsole (13, 14) entweder durch ein Stahlgußteil oder durch eine Schweißkonstruktion aus mehreren vorgeformten Stahlblechteilen realisiert ist.

11. Vordere Fahrerhaus-Lagerung nach einem der Ansprüche 1 bis 9, **dadurch gekennzeichnet, daß** das obere Tragteil (62) jeder Anschlußkonsole (13, 14) durch ein Sphärogußteil realisiert ist.

12. Vordere Fahrerhaus-Lagerung nach einem der Ansprüche 6 und 7, **dadurch gekennzeichnet, daß** die vorderen Vertikalverschraubungen (71), mit denen das Lagerteil (63) jeder Anschlußkonsole (13, 14) mit seiner oberen Stirnplatte (79) an der Stützrampe (67) eines Anschlußkonsolen-Tragteils (62) festgespannt ist, auf eine solche Grenzbelastung ausgelegt sind, daß dann, wenn im Frontalcrashfall verschiedene Deformationszonen in den Fahrerhaus-Lagerorganen (8, 9, 10) bis an ihre vorgegebenen Grenzen verformt sind, aber weiterhin eine nach hinten gerichtete Horizontalkraft wirksam ist, die besagten vorderen Vertikalverschraubungen (71) abreißen, die benachbarten hinteren Vertikalverschraubungen (72) aber nur gedehnt werden und jedes Anschlußkonsolen-Lagerteil (63) sich dann rotatorisch um diese hinteren Vertikalverschraubungen (72) bewegen kann, wodurch sich ein Axialversatz der von ihrer Stimplatte (79) nach unten beabstandeten Feder-Dämpfer-Bein- und Stabilisatorschwinge-Anlenkstellen nach hinten ergibt.

## Claims

1. Front mounts of the tiltable cab of a truck, in which mounts the cab (5) is mounted at the front on two connection consoles (13, 14), is located on the chassis frame (1, 2) via a U-shaped stabiliser swing (8) composed of two longitudinal arms (15, 16) and one cross bar (17), mounted there on bearing brackets (9, 10) and is sprung relative to said chassis frame (1, 2) by means of two spring damper struts (6, 7), each of which is located at the bottom on one spring damper strut holder (11, 12), **characterised in that** each spring damper strut (6, 7) is at the top located directly on a connection console (13, 14) and that and that each of the two connection consoles (13, 14) is composed of two parts, namely an upper carrier part (62), on which the cab (5) is mounted, and a lower bearing part (63), on which a spring damper strut (6, 7) is located at one point and the stabiliser swing (8) with one of the two bearing points (18 and 19) arranged at front left and right is located at another point.

2. Front cab mounting system according to Claim 1, **characterised in that** the cab (5) is guided in transverse direction and is tiltably located on the front end of the stabiliser swing (8) via the connection consoles (13, 14) by means of the bearing parts (63) of said connection consoles (13, 14), via bearings (20, 21) which are installed in the bearing eyes (18, 19) of said stabiliser swing (8) and have bearing shafts (94, 95) which are aligned with each other in a horizontal plane and are located in the bearing parts (63) of the connection consoles (13, 14).

3. Front cab mounting system according to one of the foregoing Claims, **characterised in that** the upper carrier part (62) of each connection console (13, 14) is designed as a large-face plate which with its rear section (73) is fastened to the cab floor (66) via several vertical bolted connections (64, 65) and with a front section (74) protrudes beyond the front end of the cab floor (66) by a certain length and forms an oblique support ramp (67), to the free upper side (68) of which ramp (67) a cross bar (69) stabilising the position of the two connection consoles (13, 14) can be fastened and to the underside (70) of said ramp (67), which underside rises towards the front, a bearing part (63) can be attached by means of several front- and rear-mounted vertical bolted connections (71, 72).

4. Front cab mounting system according to Claim 3, **characterised in that** in the rear section (73) of each connection console carrier part (62) the upper side forms a flat horizontal plane and, in the front section (74) said upper side, points upwards at an angle, the cross bar (69) being supported on and fastened to the upper side's frontmost section (68) and that the thickness of the carrier part (62) increases from the rear to its maximum approximately in the centre of its longitudinal extension in a wedge-type manner and then, from the point with this thickest cross-section, decreases towards the front end to a certain measurement, this last-mentioned area forming the support ramp (67).

5. Front cab mounting system according to one of the foregoing Claims, **characterised in that** in the transition area between the flat plate area (73) and the oblique support ramp area (74) the carrier part (62) of each connection console (13, 14) has an upward-pointing mounting flange (75) to which the cab floor (66) with a raised front edge (76) is connected in direct contact and is bolted by means of several horizontal bolted connections (77), while the cab floor area (78) towards the rear is supported on the flat upper side of the rear section (73) of the connection console carrier part (62) and is clamped into place there by means of several vertical bolted connections (64) arranged in the area with the largest thickness and of bolted connections (65) arranged in the rear end area.

6. Front cab mounting system according to one of the Claims 3 and 4, **characterised in that** the bearing part (63) of each connection console (13, 14) is, at the top, provided with a front plate (79) with a flat upper side (80) with which it is flanged on to the flat underside (70) of the support ramp (67) of a connection console carrier part (62) and is bolted into place there by means of vertical connections (71, 72).

7. Front mounting system according to Claim 6, **characterised in that** the front vertical bolted connections (71) with which the upper front plate (79) of the bearing part (63) of each connection console (13, 14) is clamped to the support ramp (67) of a connection console carrier part (62) can also be used for fastening the cross bar (69) to the front end of the section (68) of the upper side of the carrier part.

8. Front cab mounting system according to one of the foregoing Claims, **characterised in that** the bearing part (63) of each connection console (13, 14) has an upper front plate (79) with which it is flanged on to the support ramp (67) of the connection console carrier part (62) and a first outer jaw (81) placed at a distance below the front plate (79) and provided with lateral limiting walls (83, 84) and with bores (85, 86) passing through said limiting walls (83, 84) in transverse direction and designed for the laterally located support and mounting of the upper end (87, 88) of a spring damper strut (6, 7) by means of a transverse bearing shaft (89) and a second, inner jaw (82) placed in a somewhat higher position but also at a distance below said front plate (79) and provided with lateral limiting walls (90, 91) and with bores (92, 93) passing through said limiting walls (90, 91) in transverse direction and designed for the laterally located support and mounting of a bearing eye (18, 19), whose front end is arranged on the stabiliser swing (8), via the bearing (20, 21) installed in said bearing eye (18, 19) and a bearing shaft (94, 95) arranged in transverse direction.

9. Front cab mounting system according to Claim 8, **characterised in that** the inner limiting wall (84) of the outer jaw (81) and the outer limiting wall (90) of the inner jaw (82) of each connection console bearing part (63) is provided in the form of a single, common intermediate wall and all jaw-limiting walls are supported on and connected to the underside of the upper front plate (79).

10. Front cab mounts according to one of the foregoing Claims, **characterised in that** the bearing part (63) of each connection console (13, 14) is provided in the form of either a steel cast part or a welded construction composed of several preformed steel metal parts.

11. Front cab mounting system according to one of the foregoing Claims 1 to 9, **characterised in that** the upper carrier part (62) of each connection console (13, 14) is a spheroidal cast part.

12. Front cab mounting system according to one of the foregoing Claims 6 and 7, **characterised in that** the front vertical bolted connections (71), with which the bearing part (63) of each connection console (13, 14) is, with its upper front plate (79), clamped to the support ramp (67) of a connection console carrier part (62), are designed for such a limit load that, if in the event of a head-on collision various deformation zones in the cab mounting organs (8, 9, 10) are deformed to their specified limits and a horizontal force directed towards the rear still prevails, said front vertical bolted connections (71) will tear off, the adjacent rear vertical bolted connections (72) will be only elongated and each connection console bearing part (63) will then be able to turn about these rear vertical bolted connections (72), which results in a rearward axial offset of the anchor points for the spring damper struts and the stabiliser swing, said anchor points being placed at a distance below their front plate (79).

## Revendications

1. Suspension avant de cabine basculante d'un camion poids lourd sur lequel la cabine (5) est fixée à l'avant sur deux consoles d'assemblage (13, 14) et articulée sur le cadre du châssis (1, 2), à cet emplacement sur des supports de palier (9, 10), par l'intermédiaire d'un bras oscillant stabilisateur (8) en forme de U formé de deux bras longitudinaux (15, 16) et d'une traverse (17) et, vis-à-vis du cadre de châssis, est amortie par l'intermédiaire de deux amortisseurs à jambe de suspension (6, 7) articulés par le dessous sur chacun des supports d'amortisseur à jambe de suspension (11, 12), **caractérisée par le fait que** chaque amortisseur à jambe de suspension (6, 7) est articulé sur le dessus directement sur une console d'assemblage (13, 14) et **par le fait que** chacune des deux consoles d'assemblage (13, 14) est composée de deux pièces, à savoir une pièce porteuse supérieure (62) sur laquelle la cabine (5) est fixée, et une pièce de palier inférieure (63) sur laquelle sont articulés, en un point, un amortisseur à jambe de suspension (6, 7) et, en un autre point, le bras oscillant stabilisateur (8) avec l'un des deux paliers (18 ou 19) disposés à l'avant gauche ou droite.

2. Suspension avant de cabine selon la revendication 1, **caractérisée par le fait que** la cabine (5) est guidée transversalement par l'intermédiaire des consoles d'assemblage (13, 14) par leurs pièces de palier (63) et est pivotable sur l'extrémité avant du bras oscillant stabilisateur (8) par l'intermédiaire de paliers (20, 21) montés dans ses orifices (18, 19) et avec des axes de palier (94, 95) intégrés dans les pièces de palier (63) des consoles d'assemblage (13, 14) fuyant horizontalement.

3. Suspension avant de cabine selon une des revendications mentionnées précédemment, **caractérisée par le fait que** la pièce porteuse supérieure (62) de chaque console d'assemblage (13, 14) est constituée d'une plaque de grande surface fixée avec sa section arrière (73) au plancher de la cabine (66) par plusieurs vissages verticaux (64, 65), surplombe le plancher de la cabine (66) à l'avant d'une certaine cote par une section avant (74) et forme une rampe d'appui inclinée (67) ; sur la face supérieure libre (68) de cette dernière, une traverse (69) permettant de stabiliser la position des deux consoles d'assemblage (13, 14) et sur sa face inférieure inclinée vers le haut en avant, une pièce de palier (63) peut être fixée à l'aide de plusieurs vissages verticaux (71, 72) à l'avant et à l'arrière.

4. Suspension avant de cabine selon la revendication 3, **caractérisée par le fait que** la face supérieure est formée de manière plate et horizontale au niveau de la section arrière (73) d'une pièce porteuse (62) et de manière inclinée vers le haut au niveau de la section avant (74), auquel cas la traverse (69) est appuyée et fixée sur la section la plus en avant (68), et **par le fait que** l'épaisseur de la pièce porteuse (62) s'élargit en forme de coin à partir de l'arrière jusqu'à environ la moitié de son extension longitudinale jusqu'à une valeur limite et se rétrécit ensuite à partir de la position de la section la plus épaisse jusqu'à l'extrémité avant pour atteindre de nouveau une valeur déterminée, auquel cas la partie mentionnée en dernier forme la rampe d'appui (67).

5. Suspension avant de cabine selon une des revendications mentionnées précédemment, **caractérisée par le fait que** la pièce porteuse (62) de chaque console d'assemblage (13, 14) présente au niveau de la transition entre la partie de la plaque plate (73) et la partie de la rampe d'appui inclinée (74) une bride de fixation (75) orientée vers le haut, à laquelle le plancher de la cabine (66) est relié jusqu'à la butée à une arête avant relevée (75) et fixé à l'aide de vissages horizontaux, tandis que la partie du plancher de la cabine (78) se joignant vers l'arrière est appuyée sur la face supérieure plate de la section arrière (73) de la pièce porteuse (62) des consoles d'assemblage et est fixée à ce point à l'aide de plusieurs vissages verticaux (64) disposés au niveau de l'épaisseur la plus importante et par des vissages verticaux (65) disposés à l'extrémité arrière.

6. Suspension avant de cabine selon une des revendications 3 et 4, **caractérisée par le fait que** la pièce de palier (63) de chaque console d'assemblage (13, 14) présente sur le dessus une plaque (79) avec une face supérieure plate (80) avec laquelle elle est bridée sur la face inférieure plate (70) de la rampe d'appui (67) d'une pièce porteuse (62) des consoles d'assemblage et est fixée en ce point à l'aide de vissages verticaux (71, 72).

7. Suspension avant de cabine selon la revendication 6, **caractérisée par le fait que** les vissages verticaux avant (71), par lesquels la pièce de palier (63) de chaque console d'assemblage (13, 14) est fixée avec sa plaque supérieure (79) à la rampe d'appui (67) d'une pièce porteuse (62) des consoles d'assemblage, sont utilisés également en même temps pour fixer la traverse (69) à l'avant au niveau de la section de la face supérieure de la pièce porteuse (68).

8. Suspension avant de cabine selon une des revendications mentionnées précédemment, **caractérisée par le fait que** la pièce de palier (63) de chaque console d'assemblage (13, 14) présente en plus d'une plaque supérieure (79), avec laquelle elle est bridée à la rampe d'appui (67) de la pièce porteuse des consoles d'assemblage (62), une première mâchoire (81) extérieure orientée vers le bas à partir de la plaque (79) avec des parois de délimitation latérales (83, 84) et des alésages transversaux (85, 86) traversant celles-ci pour permettre la réception latérale et la fixation de l'extrémité supérieure (87, 88) d'un amortisseur à jambe de suspension (6, 7) à l'aide d'un axe de palier traversant transversalement (89) ainsi qu'une deuxième mâchoire (82) intérieure disposée vers le bas également à partir de la plaque, munie de parois de délimitation latérales (90, 91) et ces alésages transversaux (92, 93) traversant celles-ci pour permettre la réception latérale et la fixation d'un orifice de palier (18, 19) disposé à l'extrémité avant sur le bras oscillant stabilisateur (8) par l'intermédiaire du palier (20, 21) monté dedans et d'un axe de palier (94, 95) transversal.

9. Suspension avant de cabine selon la revendication 8, **caractérisée par le fait que** la paroi de délimitation intérieure (84) de la mâchoire extérieure (81) et la paroi de délimitation extérieure (90) de la mâchoire intérieure (82) de chaque pièce de palier (63) des consoles d'assemblage sont constituées d'une seule paroi intermédiaire commune et toutes les parois délimitant les mâchoires sont jointes en appui à la face arrière de la plaque supérieure (79).

10. Suspension avant de cabine selon une des revendications mentionnées précédemment, **caractérisée par le fait que** la pièce de palier (63) de chaque console d'assemblage (13, 14) est composée soit d'une pièce en fonte d'acier soit d'une construction soudée de plusieurs pièces préformées en tôle d'acier.

11. Suspension avant de cabine selon une des revendications 1 à 9, **caractérisée par le fait que** la pièce porteuse supérieure (62) de chaque console d'assemblage (13, 14) est composée d'une pièce en fonte sphérolithique.

12. Suspension avant de cabine selon une des revendications 6 et 7, **caractérisée par le fait que** les vissages verticaux avant (71), par lesquels la pièce de palier (63) de chaque console d'assemblage (13, 14) est fixée avec sa plaque supérieure (79) à la rampe d'appui (67) d'une pièce porteuse (62) des consoles d'assemblage, sont conçues pour une telle contrainte limite de façon que lorsque les différentes zones de déformation dans les organes de suspension de la cabine (8, 9, 10) sont déformées lors d'une collision frontale jusqu'à leurs limites prescrites, une force horizontale orientée vers l'arrière continue cependant d'avoir des effets, lesdits vissages verticaux avant (71) se rompent, les vissages verticaux arrière (72) adjacents ne sont toutefois qu'étirés et chaque pièce de palier (63) des consoles d'assemblage peut se mouvoir ensuite de manière rotative autour de ces vissages verticaux arrière (72), grâce auxquels il se produit un déport axial des points d'articulation des amortisseurs à jambe de suspension et du bras oscillant stabilisateur sollicités vers le bas à partir de leur plaque (79).
